# EUROPEAN PATENT APPLICATION

(11) **EP 0 710 836 A2**
(43) Date of publication of application: **08.05.1996**
(21) Application number: 95116443.3
(22) Date of filing: 18.10.1995
(51) Int. Cl.: G01N 30/74

(54) **Light detection apparatus for liquid chromatographs**

(30) Priority: 07.11.1994 JP 295944/94
(71) Applicant: JASCO CORPORATION, Hachioji-shi Tokyo (JP)
(72) Inventor: Kikuchi, Shinichi, Hachioji-shi, Tokyo (JP); Kanomata, Takeshi, Hachioji-shi, Tokyo (JP); Yamura, Hiroaki, Hachioji-shi, Tokyo (JP); Hashimoto, Shigenori, Hachioji-shi, Tokyo (JP)
(74) Representative: Weber, Joachim, Dr.

(57) **Abstract**

A light detection apparatus for liquid chromatographs includes a main body having a flow cell mounting space for receiving either a removable first flow cell (15) adapted to hold a fluorescent light emitting sample or a removable second flow cell (16) adapted to hold a chemiluminescent light emitting sample, an excitation light source (11) provided in the main body to emit excitation light toward the flow cell mounting space, a monochromater (18) for dispersing fluorescent light from the first flow cell into monochromatic light when the first flow cell is mounted within the flow cell mounting space, a first light detector (19) for receiving the dispersed fluorescent light from the monochromater, a second light detector (25) for receiving chemiluminescent light from the second flow cell when the second flow cell is mounted within the flow cell mounting space, a signal processing device (22) which receives detection signals from either the first or second light detectors and carries out a prescribed signal process on such detection signals in order to output either fluorescent light output signals or chemiluminescent light output signals, and a shutter (27) which prevents light from reaching the second light detector when the first light detector is detecting fluorescent light.

## Description

### BACKGROUND OF THE INVENTION

### Field of the Invention

The present invention relates to a light detection apparatus for liquid chromatographs, and in particular relates to a light detection apparatus for detecting fluorescent and chemiluminescent light.

### Description of the Prior Art

Examples of light detection apparatuses for liquid chromatographs include fluorescent light detectors and chemiluminescent light detectors. The fluorescent light detectors detect fluorescent light emitted from a fluorescent material sample when such sample is irradiated with excitation light, and the chemiluminescent light detectors detect light emitted from a material when such material undergoes a transition from an excited state brought about by a chemical reaction to a ground state. In general, the sensitivity of a chemiluminescent light detector is over 100 times higher than the sensitivity of a fluorescent light detector. Furthermore, because there is no need for an excitation light source, the construction of chemiluminescent light detectors is simpler than that of fluorescent light detectors. Consequently, chemiluminescent light detectors have recently been attracting attention in the practice of assaying biological components.

In both the fluorescent light detectors and the chemiluminescent light detectors, a detection process is carried out on the faint light emitted by the sample. In this connection, attempts have been made to develop a light detector that combines the features of both a fluorescent light detector and a chemiluminescent light detector. One example of such a light detection apparatus is constructed from a fluorescent light detector provided with a device such as a photomultiplier or the like for detecting chemiluminescent light.

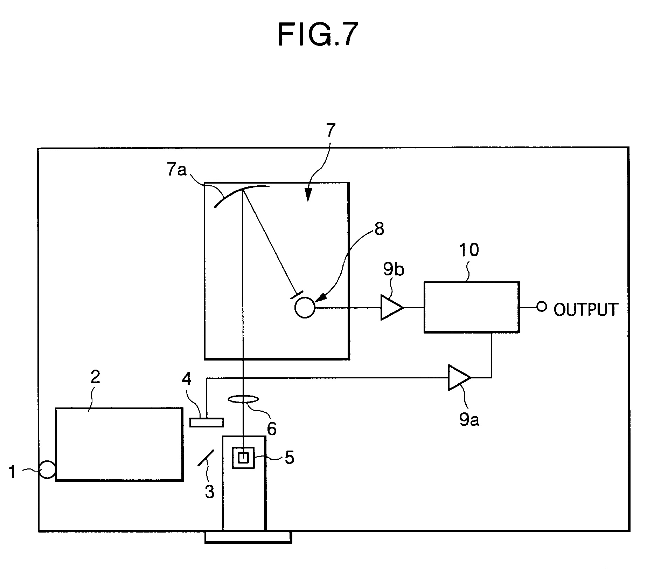

Now, Fig. 7 shows an example construction of a prior art fluorescent light detector. As shown in Fig. 7, light emitted from an excitation light source 1 is dispersed by a first monochromater 2 into monochromatic light, with a prescribed wavelength of the excitation light being directed toward a beam splitter 3. Upon striking the beam splitter 3, a large portion of the prescribed excitation light passes therethrough, but a small portion of the prescribed excitation light is reflected off the beam splitter 3 and directed toward an excitation light monitor 4, where a detection process is carried out on the reflected excitation light to determine its intensity. Next, after passing through the beam splitter 3, the large portion of the prescribed excitation light strikes a flow cell 5. The flow cell 5 is open at both ends and is a rectangular tube body constructed from quartz glass or the like. Further, a flow passage is formed inside the flow cell 5 to enable a sample to flow through the flow cell 5, whereby a sample can be irradiated with the prescribed excitation light while flowing through the flow cell 5. Now, when such a sample is being irradiated with the prescribed excitation light, the sample emits fluorescent light in all directions.

Out of the fluorescent light that is emitted, only that fluorescent light which is orthogonal to the light path of the excitation light shines into a monochromater 7 via a converging lens 6, where such light is dispersed by a diffraction grating 7a located within the monochromater 7. Then, a prescribed wavelength of such dispersed light is selected to be received by a light detector 8 equipped with a photomultiplier.

Next, the signals corresponding to the excitation light received by the excitation light monitor 4 and the signals corresponding to the fluorescent light received by the light detector 8 are sent to a signal processing device 10 after being amplified by preamplifiers 9a, 9b, respectively. By cancelling out the effects of fluctuations in the excitation light, a search of the fluorescent light components (light intensities) yields accurate measurements.

On the other hand, in the case where the fluorescent light detector is to be used as a chemiluminescent light detector, the flow cell 5 is provided with a sample which emits light as a result of a chemical reaction. In this case, because there is no need to irradiate the sample with excitation light, the excitation light source 1 is turned off. Then, in the same manner as was explained above, the light which is emitted by the sample is sent via the converging lens 6 into the monochromater 7 where it is directed toward the light detector 8.

At this time, in order to increase the quantity of light received by the light detector 8, the zeroth-order light, namely the light which is not dispersed, is directed toward the light detector 8. The signal corresponding to the-zeroth order light received by the light detector 8 is then sent to the signal processing device 10 after being amplified by the preamplifier 9b. In this case, because no excitation light is used, signals from the excitation light monitor 4 are cut off. With this construction, the fluorescent light detector described above can be used without alteration to carry out measurements of chemiluminescent light.

However, for the reason explained below, this type of fluorescent/chemiluminescent light detector is not practical because the sensitivity of chemiluminescent light measurements is only 1/1000 to 1/100 of that of exclusive chemiluminescent light detectors. Namely, the intensity of light emitted as a result of chemical reactions is much smaller than the intensity of fluorescent light emitted. For that reason, exclusive chemiluminescent light detectors must use large-size photomultipliers as light detectors in order to achieve high sensitivity. Accordingly, the photomultipliers used in fluorescent light detectors do not have sufficient sensitivity when used in chemiluminescent light detectors.

Furthermore, out of all the orders of light generated by the diffraction grating 7a of the monochromater 7, only the zeroth order light can be used in the case of chemiluminescent light. In other words, it is not possible to make effective use of the diffracted light that are greater than or equal to first order light , and this results in a portion of the emitted light being wasted. Accordingly, because only a portion of the small amount of emitted light can be used for carrying out measurements, the sensitivity of such measurements is low.

Moreover, the rectangular tube body-shaped flow cell 5 is made small in order to reduce the diffusion of the sample inside the flow cell 5. Consequently, if a flow cell of such size is used as a cell for holding a sample which emits chemiluminescent light, the intensity of the emitted light will be insufficient. Furthermore, even if the diffusion of a sample is disregarded during the carrying out of measurements of fluorescent light and a larger type of cell that is similar to the flow cell 5 is used to hold a sample which emits chemiluminescent light, the following problems will arise:
(1) The amount of chemiluminescent light generated will be small due to an incomplete mixing of the reaction reagent and the sample.
(2) The cost of the flow cell will increase.
(3) The size of the light detection apparatus will become larger as a result of the need to brighten the optical system due to the light emitting portion becoming larger.

### SUMMARY OF THE INVENTION

With a view to overcoming the problems of the prior art discussed above, it is an object of the present invention to provide a light detection apparatus for liquid chromatographs which can carry out highly sensitive measurements of both fluorescent light and chemiluminescent light. It is a further object of the present invention to provide a small-size light detection apparatus for liquid chromatographs.

To accomplish the objects stated above, the light detection apparatus according to the present invention may be constructed in several ways.

In a first example construction, the light detection apparatus comprises a main body having a flow cell mounting space for receiving either a removable first flow cell adapted to hold a fluorescent light emitting sample or a removable second flow cell adapted to hold a chemiluminescent light emitting sample, an excitation light emitting means provided in the main body to emit excitation light toward the flow cell mounting space, a light dispersing means for dispersing into monochromatic light the fluorescent light that is emitted from the first flow cell while the first flow cell is being irradiated with excitation light when the first flow cell is mounted within the flow cell mounting space, a first light detecting means arranged near the exit side of the light dispersing means to receive the dispersed fluorescent light that exits the light dispersing means, a second light detecting means to receive the chemiluminescent light that is emitted from the second flow cell due to a chemical reaction when the second flow cell is mounted within the flow cell mounting space, a signal processing means which receives detection signals from either the first or second light detecting means and carries out a prescribed signal process on such detection signals in order to output either fluorescent light output signals or chemiluminescent light output signals, and a protection means which prevents light from reaching the second light detecting means when the first light detecting means is detecting fluorescent light.

In a second example construction, the light detection apparatus comprises a main body having a flow cell mounting space for receiving either a removable first flow cell adapted to hold a fluorescent light emitting sample or a removable second flow cell adapted to hold a chemiluminescent light emitting sample, an excitation light emitting means provided in the main body to emit excitation light toward the flow cell mounting space, a light dispersing means for dispersing into monochromatic light the fluorescent light that is emitted from the first flow cell while the first flow cell is being irradiated with excitation light when the first flow cell is mounted within the flow cell mounting space, a light detecting means having a light receiving surface, a moving means which moves the light detecting means to place the light receiving surface thereof at either a first position to receive dispersed fluorescent light from the light dispersing means when the first flow cell is mounted within the flow cell mounting space or a second position to receive chemiluminescent light from the second flow cell emitted as a result of a chemical reaction when the second flow cell is mounted within the flow cell mounting space, a signal processing means which receives detection signals from the light detecting means and carries out a prescribed signal process on such detection signals in order to output either fluorescent light output signals or chemiluminescent light output signals, and a protection means which prevents excitation light from reaching the light detecting means when the light detecting means is detecting fluorescent light.

Now, in order to compensate for fluctuations in the excitation light, it is preferred that the two example constructions above be further provided with a light separating means to separate a portion of the excitation light emitted by the excitation light emitting means and an excitation light detecting means to receive and measure the portion of excitation light separated by the light separating means. Further, when the first flow cell is mounted within the flow cell mounting space, it is preferred that the signal processing means carry out a prescribed calculation process based on excitation light signals received from the excitation light detecting means and fluorescent light signals received from the respective light detecting means (i.e., the first light detecting means in the first example described above, and the light detecting means in the second example described above) in order to calculate fluorescent light output signals.

In a third example construction, the light detection apparatus comprises a main body having a flow cell mounting space for receiving either a removable first flow cell adapted to hold a fluorescent light emitting sample or a removable second flow cell adapted to hold a chemiluminescent light emitting sample, an excitation light emitting means provided in the main body to emit excitation light toward the flow cell mounting space, a light dispersing means for dispersing into monochromatic light the fluorescent light that is emitted from the first flow cell while the first flow cell is being irradiated with excitation light when the first flow cell is mounted within the flow cell mounting space, a first light detecting means arranged near the exit side of the light dispersing means to receive the dispersed fluorescent light that exits the light dispersing means, a second light detecting means having a light receiving surface to receive the chemiluminescent light that is emitted from the second flow cell due to a chemical reaction when the second flow cell is mounted within the flow cell mounting space, a beam attenuating means which is placed in front of the light receiving surface of the second light detecting means when the first flow cell is mounted within the flow cell mounting space to attenuate the intensity of excitation light which reaches the light receiving surface of the second light detecting means, and a signal processing means which receives detection signals from either the first or second light detecting means and carries out a prescribed signal process on such detection signals in order to output either fluorescent light output signals or chemiluminescent light output signals. Now, in this example construction, when the light detection apparatus is detecting fluorescent light, the signal processing means carries out a prescribed calculation process based on fluorescent light signals received from the first light detecting means and excitation light signals received from the second light detecting means in order to calculate fluorescent light output signals. On the other hand, when the light detection apparatus is detecting chemiluminescent light, the beam attenuating means is moved to expose the light receiving surface of the second light detecting means to allow chemiluminescent light from the second flow cell to directly strike the light receiving surface of the second light detecting means.

Further, it is preferred that each of the above constructions be provided with a flow cell detecting means to detect the type of flow cell mounted within the flow cell mounting space. Then, by controlling at least one of the operations of the protecting means, moving means, beam attenuating means and excitation light emitting means based on the detection result outputted from the flow cell detecting means, it becomes possible for the operation mode of the light detection apparatus to be switched automatically

Now, when one of the above described light detection apparatuses is to be used to detect fluorescent light, the first flow cell is mounted within the flow cell mounting space and then a fluorescent light emitting sample is supplied to the first flow cell. Then, depending on which of the above-described constructions is used, the protection means (in the first and second examples above) or the beam attenuating means (in the third example above) is positioned in front of the second light detecting means (in the first and third examples above) or the light detecting means (in the second example above). In this state, the excitation light emitting means is activated to irradiate the sample in the first flow cell with excitation light. When this is done, the sample emits fluorescent light, and this fluorescent light is then detected by the first light detecting means (in the first and third examples above) or the light detecting means (in the second example) which then outputs fluorescent light signals to the signal processing device.

At this time, in the first and second examples above provided with the light separating means and the excitation light detecting means, the light separating means sends a portion of excitation light to the excitation light detecting means, which then outputs excitation light signals to the signal processing device. On the other hand, in the third example described above, a portion of the excitation light passes through the beam attenuating means and is thereby attenuated in intensity. Next, this lower intensity excitation light is detected by the second light detecting means which then outputs excitation light signals to the signal processing device. Then, in order to compensate for fluctuations in the excitation light, a division process or the like is carried in the signal processing device to divide the fluorescent light signals by the excitation light signals, with the results thereof being outputted as compensated fluorescent light signals.

In this connection, the second light detecting means of the first example above and the light detecting means of the second example above are protected by their respective protecting means which prevent light from reaching the light receiving surfaces thereof. Similarly, in the third example above, the second light detecting means is protected by the beam attenuating means which attenuates the intensity of light that will reach the light receiving surface thereof.

On the other hand, when one of the above described light detection apparatuses is to be used to detect chemiluminescent light, the second flow cell is mounted within the flow cell mounting space and then a chemiluminescent light emitting sample is supplied to the second flow cell. Then, depending on which of the above-described constructions is used, the protection means (in the first and second examples above) or the beam attenuating means (in the third example above) is removed from its position in front of the second light detecting means (in the first and third examples above) or the light detecting means (in the second example above) to expose the light receiving surface thereof. At this time, the excitation light emitting means is not activated. Now, when this is done, the sample emits chemiluminescent light as a result of a chemical reaction, and this chemiluminescent light is then detected by the second light detecting means (in the first and third examples above) or the light detecting means (in the second example) which then outputs chemiluminescent light signals to the signal processing device. Now, because no excitation light is used, the signal processing device does not carry out the compensation process used in the case described above for detecting fluorescent light. Instead, the signal processing device simply outputs chemiluminescent signals based on the signals received from the appropriate light detecting means.

Now, because the second example construction above uses only one light detecting means to detect either fluorescent light or chemiluminescent light, in accordance with the detection mode of the light detection apparatus, the moving means is activated to place the light receiving surface of the light detecting means at either a first or second position to detect either fluorescent light or chemiluminescent light.

Furthermore, when the example constructions above are provided with the flow cell detecting means to detect the type of flow cell mounted within the flow cell mounting space, a predetermined set of operations can be controlled automatically based on the detection result outputted from the flow cell detecting means to enable the operation mode of the light detecting apparatus to be automatically switched to an appropriate mode for detecting either fluorescent light or chemiluminescent light.

### BRIEF DESCRIPTION OF THE DRAWINGS

Fig. 1 is a drawing of a first embodiment of a light detection apparatus according to the present invention.

Fig. 2 is a drawing of a first flow cell for holding a fluorescent light emitting sample in accordance with the present invention.

Fig. 3 is a drawing of a second flow cell for holding a chemiluminescent light emitting sample in accordance with the present invention.

Fig. 4 is a plane view of an actual arrangement of elements of a light detection apparatus in accordance with the first embodiment of the present invention.

Fig. 5 is a drawing of a second embodiment of a light detection apparatus according to the present invention.

Fig. 6 is a drawing of a third embodiment of a light detection apparatus according to the present invention.

Fig. 7 is a drawing of a prior art fluorescent light detector.

### DETAILED DESCRIPTION OF THE PREFERRED EMBODIMENTS

With reference to the appended drawings, a detailed description of the preferred embodiments of a light detection apparatus for liquid chromatographs according to the present invention will now be given.

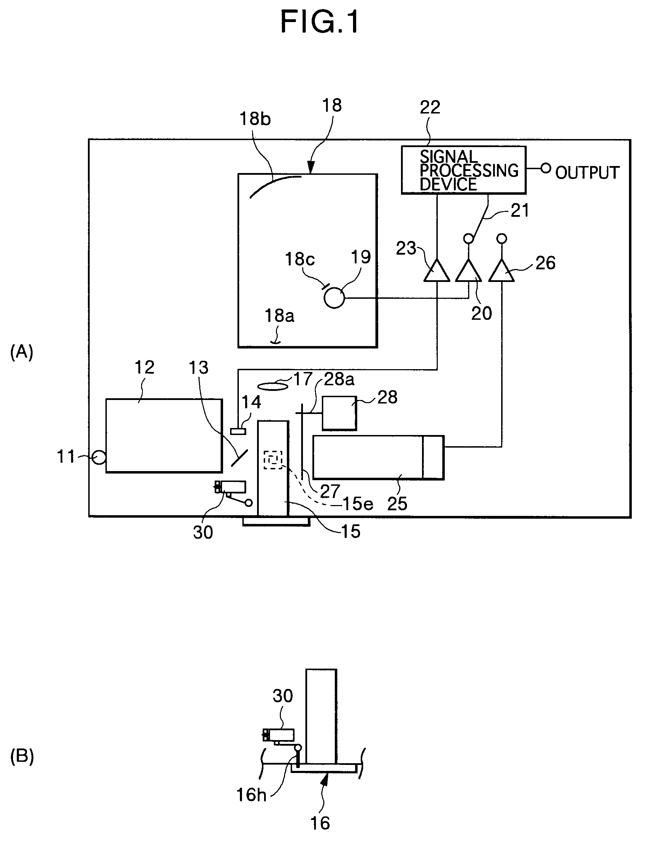

In this connection, Fig. 1 illustrates a first embodiment of the present invention. As shown in the diagram of Fig. 1, excitation light from an excitation light source 11 shines into a first monochromater 12, where such light is dispersed into monochromatic light. The dispersed excitation light then exits the first monochromater 12 and strikes a beam splitter 13. Upon striking the beam splitter 13, a small portion of the dispersed excitation light is reflected toward an excitation monitor 14, while a major portion of such light passes through the beam splitter 13 and shines on a flow cell.

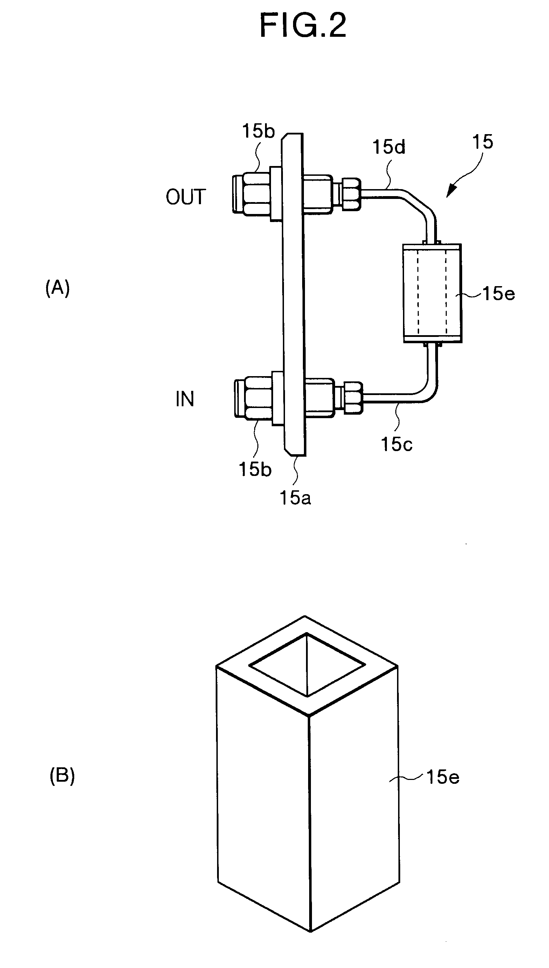

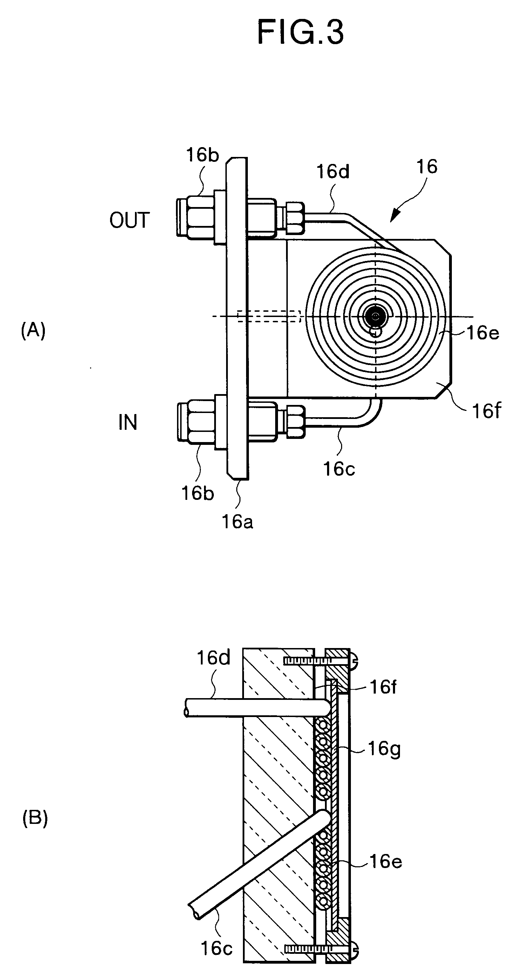

The flow cell is one of two types of removable flow cells, namely, a first type of flow cell 15, as shown in Fig. 2, which is used in the case of detecting fluorescent light, and a second type of flow cell 16, as shown in Fig. 3, which is used in the case of detecting chemiluminescent light.

As shown in Figs. 2 and 3, the flow cells 15, 16 have flat mounting plates 15a, 16a which are provided with inlets and outlets formed, respectively, in the bottom end portions and top end portions thereof. The outside ends of the inlets and outlets of the mounting plates 15a, 16a are provided with couplings 15b, 16b to enable the flow cells 15, 16 to be connected to an external piping arrangement. Further, the inside ends of the inlet and outlet of the mounting plate 15a are connected, respectively, to one end of an inlet pipe 15c and one end of an outlet pipe 15d, with the other ends of the inlet pipe 15c and the outlet pipe 15d being connected to a cell body 15e for holding a sample that will undergo a detection for fluorescent light. In a similar manner, the inside ends of the inlet and outlet of the mounting plate 16a are connected, respectively, to one end of an inlet pipe 16c and one end of an outlet pipe 16d, with the other ends of the inlet pipe 16c and the outlet pipe 16d being connected to a cell body 16e for holding a sample that will undergo a detection for chemiluminescent light.

As shown in Fig. 2 (B), the cell body 15e is formed from quartz glass or the like as a rectangular tube body which is open at both ends. As shown in Fig. 3, the cell body 16e is a coil-shaped body formed by winding a long tube made from a transparent material into a coil, with the end of the tube located at the center of the coil being connected to the inlet pipe 16c and the end of the tube located at the outermost circumference of the coil being connected to the outlet pipe 16d. Further, as shown in Fig. 3 (B), a plane mirror 16f is arranged behind the cell body 16e to reflect light emitted by the sample in the cell body 16e toward the front (the right side as seen in Fig. 1). Also, a transparent aperture plate 16g is provided in front of the cell body 16e, whereby the cell body 16e becomes sandwiched between the plane mirror 16f and the aperture plate 16g in such way that the cell body 16e is maintained as a coil-shaped body. In this connection, it is noted that it is possible to use a known flow cell for holding chemiluminescent light emitting samples for the second flow cell 16, such as the flow cell disclosed in Japanese Laid-Open Utility Model Publication No. Hei-1-64054.

Now, as is further shown in Fig. 1, a converging lens 17 and a second monochromater 18 are arranged along a line that is orthogonal to the light path which joins the beam splitter 13 and the flow cell 15. In this way, when the sample in the cell body 15e emits fluorescent light in all directions while being irradiated with excitation light, the fluorescent light which is emitted in a direction orthogonal to the light path of the excitation light shines into the second monochromater 18 via the converging lens 17.

When such fluorescent light enters the second monochromater 18, it passes through an entrance slit 18a and strikes a diffraction grating 18b which disperses the light into monochromatic light. Then, a portion of such dispersed light is received by a first light detector 19 after passing through an exit slit 18c.

In this connection, the first light detector 19 is comprised of a photomultiplier having a sufficient sensitivity for detecting fluorescent light. Now, after receiving such dispersed light, the light detector 19 outputs signals to a preamplifier 20 which amplifies the signals and sends them to a signal processing device 22 via a switch 21. Furthermore, the signal processing device 22 also receives signals outputted by the excitation light monitor 14 via a preamplifier 23.

In the signal processing device 22, the fluorescent light detected by the first light detector 19 is divided by the excitation light detected by the excitation light monitor 14. At the same time, the signal processing device 22 carries out a prescribed process for analyzing the sample flowing through the cell body 15e. In this regard, because the function of the signal process that is carried out is essentially the same as that of the exclusive fluorescent light detectors of the prior art, a detailed description of such will not be given. In this connection, except for the use of the second flow cell 16 shown in Fig. 3, the above construction becomes a fluorescent light detector.

Now, in order for the above construction to become a chemiluminescent light detector the following steps need to be taken. First, the first flow cell 15 is replaced by the second flow cell 16 which is mounted into the light detector body. At this time, the aperture plate 16g is positioned to face the second light detector 25, namely, in the direction which faces toward the right in Fig. 1.

When the second flow cell 16 is mounted into the light detector body, a second light detector 25 is arranged near the second flow cell 16 so as to face the coil-shaped cell body 16. In this case, it is preferred that the size of the light receiving surface of the second light detector 25 be the same as that of the cell body 16e, or that such light receiving surface be a "head-on" type surface, with such light receiving surface being arranged parallel with the cell body 16 in a manner that aligns the center of the light receiving surface with the center of the cell body 16. Further, the second light detector 25 uses a photomultiplier that has a higher sensitivity and a larger light receiving surface than that used in the first light detector 19. In this connection, because the light emitting surface area of the cell body 16e of the second flow cell 16 is larger than that of the cell body 15e of the first flow cell 15, it is possible for the second light detector 25 to detect a sufficient amount of light emitted by a sample in the cell body 16e without any of such emitted light being wasted, even when the light emitted by the sample is very faint. Accordingly, it is possible to achieve the light gathering efficiency of prior art exclusive chemiluminescent light detectors, which are several hundred times more sensitive than exclusive fluorescent light detectors. Thus, it is possible for the light detection apparatus according to the present invention to be used as a fluorescent light detector or a chemiluminescent light detector having a sufficiently high sensitivity.

As for the output of the second light detector 25, it is sent to the signal processing device 22 via a preamplifier 26 and the switch 21. In the signal processing device 22, a prescribed process similar to that performed by an ordinary chemiluminescent detector is carried out to analyze the sample in the cell body 16e. However, in this case, the signal inputs from the preamplifier 23 connected to the excitation light monitor 14 are cut off. In this connection, because the function of the signal process that is carried out is essentially the same as that of the exclusive chemiluminescent light detectors of the prior art, a detailed description of such will not be given.

Further, in the present embodiment, a shutter 27 is arranged between the second light detector 25 and the position where the flow cells 15, 16 are mounted, with a solenoid 28 being provided to open and close the shutter 27. In the present embodiment, the solenoid 28 is an electromagnetic type rotary solenoid which has an output shaft 28a connected to one end of the shutter 27. Now, by rotating the output shaft 28a in either the clockwise or counterclockwise directions, it is possible to open the shutter 27 in the case where the light detection apparatus is to be used as a chemiluminescent light detector to allow the chemiluminescent light emitted by the sample in the second flow cell 16 to be received by the second light detector 25, and to close the shutter 27 in the case where the light detection apparatus is to be used as a fluorescent light detector to prevent high intensity excitation light from reaching the second light detector 25. In this way, when the second light detector 25 is not being used, it is possible to shield the second light detector 25 from light in order to prevent the second light detector 25 from being degraded. In this connection, it should be noted the shutter 27 is not limited to rotational movement; instead, the shutter 27 may be arranged to undergo other types of movement, such as parallel displacement. Furthermore, the mechanism for moving the shutter 27 is not limited to a solenoid; instead, it is possible to employ other driving mechanisms such as a motor or the like, and it is even possible to employ a manually operated drive means.

Further, in the present embodiment, a microswitch 30 is provided in the light detection apparatus near the inside of the mounting port for holding the flow cells 15, 16, and as shown in Fig. 1 (B), a pin 16h is provided on the inside surface of the mounting plate 16a of the second flow cell 16. With this arrangement, when the second flow cell 16 is mounted in the light detection apparatus, the tip pin 16h pushes the microswitch 30 and thereby causes the microswitch 30 to be switched to an "On" state.

Namely, when the microswitch 30 is in an "On" state, it means that the second flow cell 16 for carrying out detection of chemiluminescent light is mounted within the light detection apparatus, and based on such "On" signal the light detection apparatus switches to a detection mode for detecting chemiluminescent light. Specifically, the contact point of the switch 21 is switched from the preamplifier 20 to the preamplifier 26, whereby the signal processing device 22 receives the output from the second light detector 25, namely the output corresponding to detected chemiluminescent light. Further, upon receiving an "On" signal, the signal processing device 22 determines which signals are to be inputted and then carries out a prescribed process. On the other hand, when an "Off" signal is received, operations opposite to those described above are carried out. In this connection, it is to be noted that such automatic switching operations can be replaced by manual switching operations carried out by an operator.

Next, the operation of the present embodiment will be described. First, in the case where the light detection apparatus is to be used as a fluorescent light detector, the first flow cell 15 is mounted in the light detection apparatus. In this case, because the microswitch 30 remains in an "Off" state, the switch 21 stays in contact with the preamplifier 20 which is connected to the first light detector 19. Consequently, the shutter 27 is kept in a closed state to prevent light from reaching the light receiving surface of the second light detector 25. Then, a fluorescent light emitting sample is continuously supplied through the cell body 15e.

In this state, the excitation light source 11 is activated to emit excitation light which is dispersed into monochromatic light as it passes through the first monochromater 12. Then, a major portion of the dispersed excitation light passes through the beam splitter 13 and strikes the first flow cell 15, thereby generating an excitation in the sample within the cell body 15e. This excitation then causes the sample to emit fluorescent light which passes through the converging lens 17 and the entrance slit 18a to enter into the second monochromater 18, where the light strikes the diffraction grating 18b and is dispersed thereby into monochromatic light. Then, after each wavelength component of the dispersed light is detected by the first light detector 19, the output corresponding to such detected wavelength components is sent to the preamplifier 20, where such output is amplified and then sent as fluorescent light signals to the signal processing device 22.

At the same time, a portion of the excitation light which strikes the beam splitter 13 is reflected toward the excitation light monitor 14, where the reflected excitation light is converted into electrical signals. These electrical signals are then sent to the preamplifier 23, where they are amplified and then sent as excitation light monitor signals to the signal processing device.

Now, in order to compensate for fluctuations in the excitation light, a division process is carried to divide the fluorescent light signals by the excitation light monitor signals, with the results thereof being outputted as compensated fluorescent light signals.

On the other hand, in the case where the light detection apparatus is to be used as a chemiluminescent light detector, the second flow cell 16 is mounted in the light detection apparatus. When this is done, the pin 16h provided on the mounting plate 16a pushes the microswitch 30 to switch the microswitch 30 to an "On" state, whereby the light detection apparatus is switched from a fluorescent light detection mode to a chemiluminescent light detection mode.

Namely, the contact between the switch 21 and the preamplifier 20 is broken and a contact is established between the switch 21 and the preamplifier 26 to allow signals from the preamplifier 26 to reach the signal processing device 22.

At this time, because the microswitch is in an "On" state, the light detection apparatus sends a deactivation command to the excitation light power supply to turn off the excitation light. As a result, no excitation light will reach the second flow cell 16. Further, the solenoid 28 is activated to open the shutter 27, whereby the light receiving surface of the second light detector 25 becomes open to the second flow cell 16.

In this state, when a sample is supplied into the cell body 16e of the second flow cell 16, a chemical reaction causes a prescribed light to be generated. Such light is then detected by the second light detector 25. At this time, even though the intensity of such generated light is quite weak, it is possible to obtain sufficient light intensity due to the excellent light gathering efficiency of the arrangement of elements, as discussed previously above.

Next, the second light detector 25 sends signals corresponding to the detected chemiluminescent light to the signal processing device 22 via the preamplifier 26. In this case, because there is no excitation light emitted by the excitation light source 11, the division process described above for the case of detecting fluorescent light is not carried out by the signal processing device 22. Instead, the signal processing device 22 outputs chemiluminescent light signals based on the signals received from the preamplifier 26.

In this connection, because the second flow cell 16 of the present embodiment uses a coil-shaped cell body 16e, a large light emitting surface can be achieved without having to increase the capacity of the second flow cell 16, and this makes it possible to obtain a sufficient intensity of generated light. Thus, by adjusting the diameter of the cell body 16e with the light receiving surface of the second light detector 25, it is possible to direct an effective amount of generated light into the second light detector 25. Furthermore, because the flow path of the cell body 16e is curved, an agitation effect is created in a direction perpendicular to such flow. As a result, the mixing of the sample and the reaction reagent is accelerated to speed up the reaction.

In this way, because the light detecting apparatus according to the present invention has an excellent light detection sensitivity either as a fluorescent light detector or a chemiluminescent light detector, it is possible to carry out a wide variety of measurements. Namely, by simply mounting either the first flow cell 15 or the second flow cell 16 into the light detection apparatus according to the present invention, it is possible to detect either fluorescent light or chemiluminescent light. For example, it is possible to measure the amount of catecholamine in a sample of urine by carrying out a fluorescent light analysis using ethylenediamine as a fluorescent reagent. Then, after such measurements are completed, the first flow cell 15 is replaced by the second flow cell 16 in orde to carry out a chemiluminescent light analysis to determine the amount of catecholamine in a sample of blood.

Furthermore, in the case where it is not possible to obtain a sufficient detection sensitivity when carrying out measurements on a specified sample using a fluorescent light analytical method, if such specified sample is suitable for measurement using a chemiluminescent light analytical method, it is possible to obtain a sufficient detection sensitivity by putting such specified sample in the second flow cell 16 and carrying out a chemiluminescent light detection process with the light detection apparatus according to the present invention. For example, in the case where it is not possible to obtain a desired sensitivity when carrying out measurements for the dipridamole using a fluorescent light analytical method, it is possible to obtain the desired sensitivity by carrying out such methods using a chemiluminescent light analytical method with peroxalic ester and hydrogen peroxide as the reaction reagent.

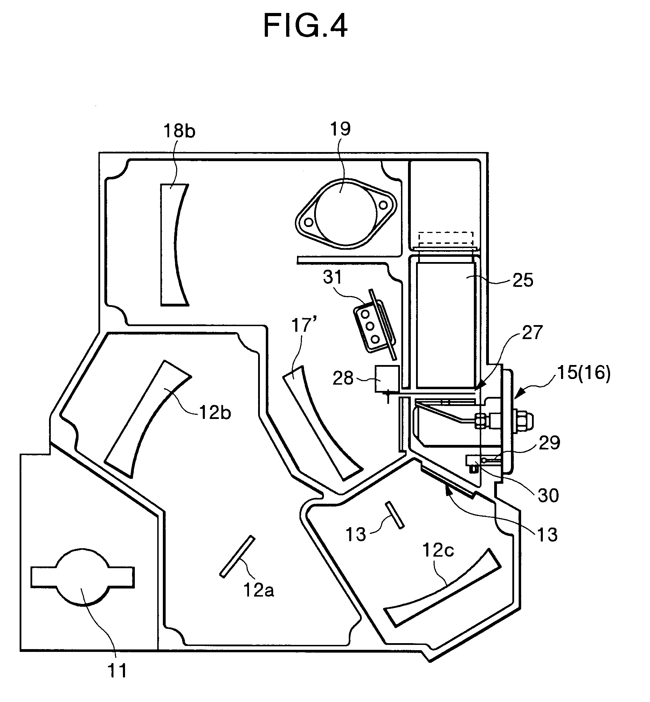

Now, Fig. 4 is a layout drawing showing the arrangement of elements in an actual light detection apparatus constructed in accordance with the first embodiment of the present invention described above. As shown in this drawing, the excitation monochromater is comprised of a plane mirror 12a which changes the light path, a concave diffraction grating 12b, and a concave mirror 12c for converging prescribed light onto the beam splitter 13. Namely, excitation light from an excitation light source 11 strikes the plane mirror 12a and is reflected toward the diffraction grating 12b, where such excitation light is dispersed into monochromatic light. This dispersed excitation light then strikes the concave mirror 12c, which converges and directs such dispersed excitation light toward the first flow cell 15 which holds a fluorescent light emitting sample.

Further, a concave mirror 17' is used in place of the converging lens 17 to converge the fluorescent light which is emitted by the first flow cell 15. Then, the fluorescent light which is converged by the concave mirror 17' is shined onto the diffraction grating 18b via a plane mirror 31. In this way, by using plane mirrors to change the light path, and by using the concave mirror 17', the optical components can be arranged so as to make efficient use of space, whereby it becomes possible to construct a small-size light detection apparatus. Furthermore, by using this arrangement of components, the second light detector 25 for detecting chemiluminescent light may even be in a prior art exclusive fluorescent light detector by arranging the second light detector 25 within the dead space thereof. Accordingly, by using wasted space to house the optical components for detecting chemiluminescent light, the light detection apparatus according to the present invention can be made to have the same overall dimensions as an exclusive fluorescent light detector. Thus, it is possible to use the same casing and the like for the light detection apparatus according to the present embodiment.

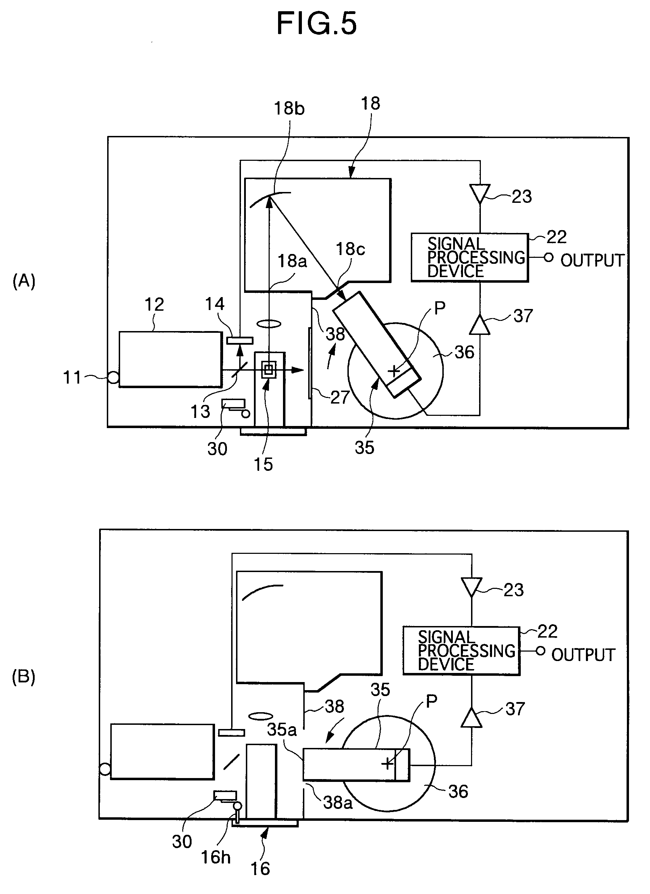

Next, Fig. 5 shows a second embodiment of a light detection apparatus according to the present invention. As shown in this drawing, the basic structure of the light detection apparatus according to the second embodiment is similar to that of the first embodiment. However, in the present embodiment a single light detector 35 having a light receiving surface 35a is used to detect both fluorescent light and chemiluminescent light. To accomplish this function, the light detector 35 is mounted on a rotation means comprised of a turntable 36 which is able to rotate in both the clockwise and counterclockwise directions within a horizontal plane. Now, because the light detector 35 is used to detect both fluorescent light and chemiluminescent light, the light detector 35 uses a photomultiplier having a high sensitivity appropriate for detecting chemiluminescent light.

The output of the light detector 35 is sent to a signal processing device 22 via a preamplifier 37. Further, a light shielding wall 38 is provided between the light detector 35 and the flow cells 15, 16, and formed in the light shielding wall 38 is an aperture 38a which can be covered by a shutter 27.

The shutter 27 can be opened and closed by a drive means such as a solenoid or the like (not shown in Fig. 5) in the same manner as was explained above for the first embodiment. Further, a microswitch 30 is provided, and based on "On"/"Off" signals from the microswitch 30, the turntable 36 is caused to turn in a prescribed direction through a prescribed angle and the shutter 27 is moved in a prescribed direction to either expose or cover the aperture 38a of the light shielding wall 38. At the same time, this "On"/"Off" signal is sent to the signal processing device 22 to cause the light detection apparatus to switch to the appropriate light detection mode. Upon receiving such "On"/"Off" signal, the signal processing device 22 determines whether or not use the signals from the preamplifier 23 connected to the excitation light monitor 14 and carries out a prescribed signal process on the signals received from the preamplifier 37. As for the other elements of the light detection apparatus, they are the same as those of the first embodiment, and therefore the same designations will be used without further description.

Next, the operation of the second embodiment will be given. First, in the case of detecting fluorescent light, as shown in Fig. 5 (A), the turntable 36 is activated to align the light receiving surface 35a of the light detector 35 with the exit slit 18c of the second monochromater 18. In this connection, the turntable 36 rotates around a center P. When this done, fluorescent light which is dispersed by the diffraction grating 18b passes through the exit slit 18c and strikes the light receiving surface 35a of the light detector 35, whereby the intensity of such light is measured. Then, the light detector 35 transmits detection signals corresponding to such measurements to the signal processing device 22 via the preamplifier 37. At the same time, the excitation monitor 14 sends signals corresponding to the detected portion of excitation light reflected from the beam splitter 13 to the signal processing device 22 via the preamplifier 23.

Next, in order to compensate for fluctuations in the excitation light, a division process is carried in the signal processing device 22 to divide the fluorescent light signals from the preamplifier 37 by the excitation light monitor signals from the preamplifier 23, with the results thereof being outputted as compensated fluorescent light signals. In this connection, even though some of the excitation light that shines on the flow cell 15 passes straight through the flow cell 15, none of such excitation light reaches the light detector 35 because the shutter 27 covers the aperture 38a of the light shielding wall 38.

On the other hand, in the case where the light detection apparatus is to be used as a chemiluminescent light detector, as shown in Fig. 5 (B), the second flow cell 16 is mounted in the light detection apparatus. When this is done, the pin 16h provided on the second flow cell 16 pushes the microswitch 30 to switch the microswitch 30 to an "On" state, whereby the light detection apparatus is switched from a fluorescent light detection mode to a chemiluminescent light detection mode.

At this time, because the microswitch is in an "On" state, the light detection apparatus sends a deactivation command to the excitation light power supply to turn off the excitation light. As a result, no excitation light will reach the second flow cell 16.

Further, the shutter 27 is moved to expose the aperture 38a of the light shielding wall 38 and the turntable 36 is activated to align the light receiving surface 35a of the light detector 35 with the light emitting surface of the second flow cell 16. In this way, the chemiluminescent light which is emitted by the sample in the second flow cell 16 is able to pass through the aperture 38a and strike the light receiving surface 35a of the light detector 35, whereby the intensity of such light is measured. Then, the light detector 35 transmits detection signals corresponding to such measurements to the signal processing device 22 via the preamplifier 37. In this case, because the signals from the preamplifier 23 are nullified, the signal processing device 22 outputs chemiluminescent signals based on the signals received from the preamplifier 37.

As described above, the second embodiment of a light detection apparatus according to the present invention does not need two light detectors to both fluorescent light and chemiluminescent light, and this makes it possible to construct a simple, low-costing, small-size light detecting apparatus that has excellent operation characteristics. Now, with regards to both the other elements of the light detection apparatus and the operation results thereof, since they are the same as those elements and operation results of the first embodiment, a description of such will not be given.

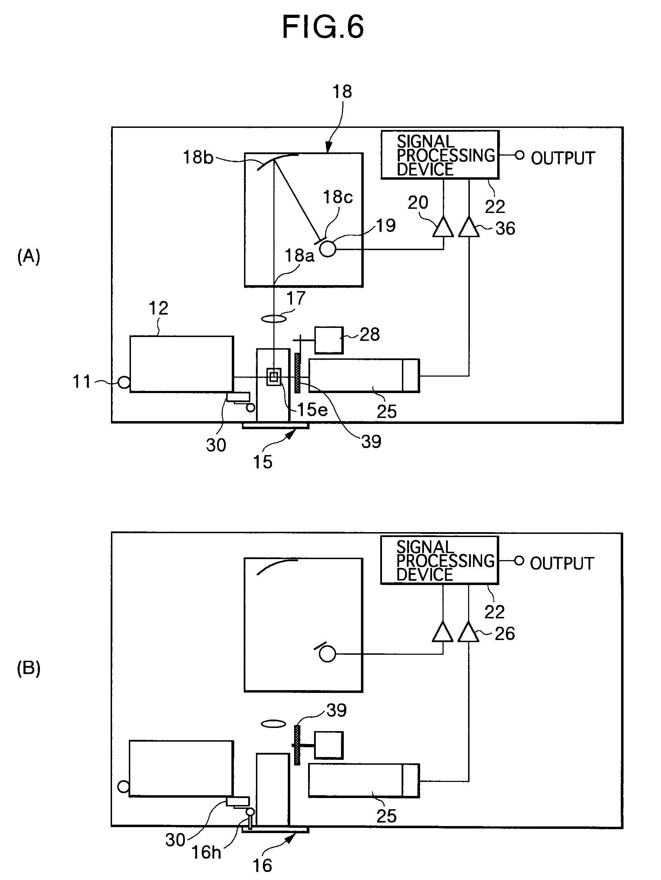

Next, Fig. 6 shows a third embodiment of a light detection apparatus according to the present invention. As shown in this drawing, the basic structure of the light detection apparatus according to the third embodiment is similar to that of the first embodiment. However, in the present embodiment the exclusive excitation light monitor that was used in the first embodiment is omitted, and the second light detector which was not used in the first embodiment during the fluorescent light detection mode is used in the present embodiment as an excitation light monitor.

Namely, in the same manner as was described for the first embodiment, the present embodiment of a light detection apparatus has a first light detector 19 for detecting fluorescent light and a second light detector 25 for detecting chemiluminescent light respectively arranged at prescribed positions. Further, in the same manner as was described above for the first embodiment, the light detector 19 uses a photomultiplier appropriate for detecting fluorescent light and the light detector 25 uses a photomultiplier appropriate for detecting chemiluminescent light.

Now, the particular difference between the structure of the present embodiment and that of the first embodiment is that the present embodiment omits the beam splitter, the excitation light monitor and the preamplifier connected to the excitation light monitor provided in the first embodiment. Furthermore, in place of the shutter of the first embodiment, the present embodiment uses a beam attenuator 39 which is connected to a solenoid 28 which moves the beam attenuator 39 to either expose or cover the light receiving surface of the second light detector 25. In particular, when the light detecting apparatus of the present embodiment is to be used to detect fluorescent light, the beam attenuator 39 covers the light receiving surface of the second light detector 25, as shown in Fig. 6 (A). In this state, the excitation light that passes through the first flow cell 15 strikes the beam attenuator 39 and passes therethrough, whereby such excitation light is attenuated in intensity by a specified amount. This lower intensity light is then received by the second light detector 25 which is now acting as an excitation light monitor. As for the other elements of the light detection apparatus, since they are the same as those of the first and second embodiments, a description of such will not be given.

Next, the operation of the third embodiment will be given. First, in the case of detecting fluorescent light, as shown in Fig. 6 (A), the first flow cell 15 is mounted in the light detection apparatus. At this time, because the microswitch 30 remains in an "Off" state, the beam attenuator 39 is held in a closed position to cover the light receiving surface of the second light detector 25, the excitation light source 11 is activated to emit excitation light, and the signal processing device 22 switches to a fluorescent light detection mode.

In this state, the excitation light that is emitted from the excitation light source 11 is dispersed by the first monochromater 12 into monochromatic light, and then this dispersed excitation light is shined onto the fluorescent light emitting sample in the cell body 15e of the first flow cell 15. When this is done, the fluorescent light that is emitted by the sample is measured in the same manner as was described above for the first embodiment, with the signals corresponding to such measurements being sent to the signal processing device 22.

On the other hand, in the present embodiment, a portion of the excitation light that shines on the cell body 15e passes straight through the flow cell 15 and strikes the beam attenuator 39. This light is then attenuated in intensity by a specified amount as it passes through the beam attenuator 39, and then this lower intensity light is received by the second light detector 25. Furthermore, because the fluorescent light that is emitted by the sample in the cell body 15e is emitted in all directions, a portion of such emitted fluorescent light also reaches the second light detector 25 after passing through the beam attenuator 39. However, this portion of fluorescent light can be ignored because the intensity of such fluorescent light is extremely small in comparison to the intensity of the excitation light received by the second light detector 25.

Accordingly, the excitation light received by the second light detector 25 can be measured, and in this way the second light detector 25 can function as the excitation light monitor described above for the first embodiment. Namely, the output of the second light detector 25 in the case of detecting fluorescent light corresponds to the output of the excitation light monitor of the first embodiment. Accordingly, the signal processing device 22 receives the signals from the preamplifier 26 as excitation light monitor signals. Then, in order to compensate for fluctuations in the excitation light, the fluorescent light signals received from the preamplifier 20 are divided by the excitation light monitor signals received from the preamplifier 26, with the results thereof being outputted as compensated fluorescent light signals.

Now, in the case where the light detection apparatus is to be used as a chemiluminescent light detector, the second flow cell 16 is mounted in the light detection apparatus. When this is done, the pin 16h provided on the second flow cell 16 pushes the microswitch 30 to switch the microswitch 30 to an "On" state, whereby the light detection apparatus is switched from a fluorescent light detection mode to a chemiluminescent light detection mode. Namely, the solenoid is activated to move the beam attenuator 39 to uncover the light receiving surface of the second light detector 25. Then, as shown in Fig. 6 (B), the light detection apparatus is used to detect chemiluminescent light in the same manner as was described above for the first embodiment.

As described above, because the third embodiment of a light detection apparatus according to the present invention does not need an exclusive excitation light monitor, it is possible to construct a simple, low-costing, small-size light detecting apparatus that has excellent operation characteristics. Now, with regards to both the other elements of the light detection apparatus and the operation results thereof, since they are the same as those elements and operation results of the first embodiment, a description of such will not be given.

In summary, the light detection apparatus according to the present invention can be used to detect either fluorescent light or chemiluminescent light simply by switching between either a first flow cell for holding a fluorescent light emitting sample or a second flow cell for holding a chemiluminescent light emitting sample. Furthermore, as was described in the embodiments above, various flow cell having appropriate sensitivities can be employed for detecting fluorescent light and chemiluminescent light. Moreover, it is possible to use the same light detecting means in a variety of arrangements to detect fluorescent light and chemiluminescent light. Accordingly, the present invention provides a light detection apparatus that can be used as either a fluorescent light detector or a chemiluminescent light detector. Moreover, the present invention makes it possible to construct a low costing, small-size light detection apparatus.

Finally, it is to be noted that many changes and additions may be made to the embodiments described above without departing from the scope and spirit of the present invention as defined by the appended claims.

## Claims

1. A light detection apparatus for liquid chromatographs, comprising:
a main body having a flow cell mounting space for receiving either a removable first flow cell (15) adapted to hold a fluorescent light emitting sample or a removable second flow cell (16) adapted to hold a chemiluminescent light emitting sample;
an excitation light emitting means (11,12) provided in the main body to emit excitation light toward the flow cell mounting space;
a light dispersing means (18) for dispersing fluorescent light from the first flow cell into monochromatic light when the first flow cell is mounted within the flow cell mounting space;
a first light detecting means (19) for receiving the dispersed fluorescent light from the light dispersing means;
a second light detecting means (25) for receiving chemiluminescent light from the second flow cell when the second flow cell is mounted within the flow cell mounting space;
a signal processing means (22) which receives detection signals from either the first or second light detecting means and carries out a prescribed signal process on such detection signals in order to output either fluorescent light output signals or chemiluminescent light output signals; and
a protection means (27,28) which prevents light from reaching the second light detecting means when the first light detecting means is detecting fluorescent light.

2. A light detection apparatus for liquid chromatographs, comprising:
a main body having a flow cell mounting space for receiving either a removable first flow cell (15) adapted to hold a fluorescent light emitting sample or a removable second flow cell (16) adapted to hold a chemiluminescent light emitting sample;
an excitation light emitting means (11,12) provided in the main body to emit excitation light toward the flow cell mounting space;
a light dispersing means (18) for dispersing fluorescent light from the first flow cell into monochromatic light when the first flow cell is mounted within the flow cell mounting space;
a light detecting means (35) having a light receiving surface;
a moving means (36) which moves the light detecting means to place the light receiving surface thereof at either a first position to receive dispersed fluorescent light from the light dispersing means when the first flow cell is mounted within the flow cell mounting space or a second position to receive chemiluminescent light from the second flow cell when the second flow cell is mounted within the flow cell mounting space;
a signal processing means (22) which receives detection signals from the light detecting means and carries out a prescribed signal process on such detection signals in order to output either fluorescent light output signals or chemiluminescent light output signals; and
a protection means (27) which prevents excitation light from reaching the light detecting means when the light detecting means is detecting fluorescent light.

3. The light detection apparatus of Claim 1 or 2, further comprising:
a light separating means (13) to separate a portion of the excitation light emitted by the excitation light emitting means; and
an excitation light detecting means (14) to detect the portion of excitation light separated by the light separating means;
wherein, the signal processing means (22) carries out a prescribed calculation process based on excitation light signals received from the excitation light detecting means and fluorescent light signals received from the first light detecting means in order to calculate fluorescent light output signals when the light detecting apparatus is in a fluorescent light detecting mode.

4. A light detection apparatus for liquid chromatographs, comprising:
a main body having a flow cell mounting space for receiving either a removable first flow cell (15) adapted to hold a fluorescent light emitting sample or a removable second flow cell (16) adapted to hold a chemiluminescent light emitting sample;
an excitation light emitting means (11,12) provided in the main body to emit excitation light toward the flow cell mounting space;
a light dispersing means (18) for dispersing fluorescent light from the first flow cell into monochromatic light when the first flow cell is mounted within the flow cell mounting space;
a first light detecting means (19) for receiving the dispersed fluorescent light from the light dispersing means;
a second light detecting means (25) having a light receiving surface to receive the chemiluminescent light that is emitted from the second flow cell when the second flow cell is mounted within the flow cell mounting space;
a beam attenuating means (39) which is placed in front of the light receiving surface of the second light detecting means when the first flow cell is mounted within the flow cell mounting space to attenuate the intensity of excitation light which reaches the light receiving surface of the second light detecting means;
a signal processing means (22) which receives detection signals from either the first or second light detecting means and carries out a prescribed signal process on such detection signals in order to output either fluorescent light output signals or chemiluminescent light output signals;
wherein, when the light detecting apparatus is detecting fluorescent light, the signal processing means carries out a prescribed calculation process based on fluorescent light signals received from the first light detecting means and excitation light signals received from the second light detecting means in order to calculate fluorescent light output signals, and when the light detection apparatus is detecting chemiluminescent light, the beam attenuating means is moved to expose the light receiving surface of the second light detecting means to allow chemiluminescent light from the second flow cell to directly strike the light receiving surface of the second light detecting means.

5. The light detection apparatus of Claim 1,2,3 or 4, further comprising:
a flow cell detecting means (30) to detect the type of flow cell mounted within the flow cell mounting space;
wherein at least one of the operations of the protecting means and excitation light emitting means is controlled based on a detection result outputted by the flow cell detecting means.

6. The light detection apparatus of Claim 2, further comprising:
a light separating means to separate a portion of the excitation light emitted by the excitation light emitting means; and
an excitation light detecting means to detect the portion of excitation light separated by the light separating means;
wherein, the signal processing means carries out a prescribed calculation process based on excitation light signals received from the excitation light detecting means and fluorescent light signals received from the light detecting means in order to calculate fluorescent light output signals when the light detecting apparatus is in a fluorescent light detecting mode.

7. The light detection apparatus of Claim 2, further comprising:
a flow cell detecting means to detect the type of flow cell mounted within the flow cell mounting space;
wherein at least one of the operations of the protecting means, moving means and excitation light emitting means is controlled based on a detection result outputted by the flow cell detecting means.

8. The light detection apparatus of Claim 5, further comprising:
a flow cell detecting means to detect the type of flow cell mounted within the flow cell mounting space;
wherein at least one of the operations of the beam attenuating means and excitation light emitting means is controlled based on a detection result outputted by the flow cell detecting means.
